# EUROPÄISCHE PATENTANMELDUNG

(11) **EP 1 398 581 A2**
(43) Veröffentlichungstag der Anmeldung: **17.03.2004**
(21) Anmeldenummer: 03018432.9
(22) Anmeldetag: 14.08.2003
(51) Int. Cl.: F24J 2/20

(54) **Heiz- bzw. Kühlkollektoren**

(30) Priorität: 12.09.2002 CH 15472002
(71) Anmelder: Sarnafil International AG, 6060 Sarnen (CH)
(72) Erfinder: Keiser, Stefan, 6103 Schwarzenberg (CH); Rohrer, Martin, 6072 Sachslen (CH); Delineau, Lydie, 6055 Alpnach (CH)
(74) Vertreter: Troesch Scheidegger Werner AG

(57) **Zusammenfassung**

Eine Vorrichtung zum Erwärmen oder Abkühlen eines fluiden Mediums durch Umgebungseinflüsse, wie Licht, Sonneneinstrahlung und/oder Umgebungstemperatur, etc. weist mindestens zwei parallel zueinander angeordnete Folien (3, 5) auf, welche derart teilweise aneinander haften, dass ein oder mehrere kammerartige Hohl- bzw. Zwischenräume für die Aufnahme des fluiden Mediums (9) gebildet werden. Die Vorrichtung weist mindestens eine Öffnung (13) auf für das Zuführen eines fluiden Mediums, sowie mindestens eine Öffnung (15) für das Abführen des fluiden Mediums. Die Herstellung der Vorrichtung erfolgt beispielsweise mittels Breitschlitzextrusion zweier Folien, welche aneinander liegend extrudiert werden, wobei zwischen den beiden Folienschichten in denjenigen Bereichen, in welchen die kammerartigen Hohlräume auszubilden sind, ein Trennmaterial, wie eine Trennfolie, ein Trennvlies, ein Trenngewebe oder ein Trennmittel eingeführt wird. Zur Herstellung der Vorrichtung ist es aber auch möglich eine Folie, aufweisend Prägungen, auf einer weiteren Folie zu kaschieren, wobei an den erhöhten Stellen der Prägungen die Folien fest aneinander gefügt bzw. miteinander verbunden werden, und an den vertieften Stellen der Prägungen die Hohlräume gebildet werden.

## Beschreibung

Die vorliegende Erfindung betrifft eine Vorrichtung zum Erwärmen oder Abkühlen eines fluiden Mediums durch Umgebungseinflüsse wie Licht, Sonneneinstrahlung, Abstrahlung, Umgebungstemperatur etc. gemäss dem Oberbegriff nach Anspruch 1, ein Verfahren zur Herstellung einer Vorrichtung, eine Kollektoranlage zur Wärmegewinnung und/oder zur Klimatisierung sowie eine Verwendung der Vorrichtung bzw. der Anlage.

Um möglichst Energie beim Heizen bzw. der Warmwassererzeugung sowie beim Kühlen von Gebäuden und Schwimmbecken einzusparen, werden vermehrt Dachflächen und/oder Fassaden für das Anbringen von Heiz- bzw. Kühlkollektoren verwendet. Sei dies, um Wärme beispielsweise in Form von durch Sonneneinstrahlung erwärmten Wassers oder eines anderen Wärmeträgermediums zu erzeugen, oder um Wärme an die Umgebung abzuführen für die Kühlung des Gebäudeinneren.

In der Regel werden dazu Kollektoren wie beispielsweise verglaste Flach- oder Vakuumröhrenkollektoren verwendet, welche beispielsweise auf einem Dach angeordnet sind und in welchen Wasser oder ein anderes geeignetes Wärmeträgermedium durch Sonneneinstrahlung erwärmt wird. In beispielsweise einer mit dem oder den Kollektoren gekoppelten Wärmepumpe oder einem Wärmetauscher kann dann mittels der erwärmten Flüssigkeit in einem weiteren Flüssigkeitskreislauf die für das Heizen des Gebäudes oder für die Erzeugung von Warmwasser benötigte Temperatur eingestellt werden. Das dadurch abgekühlte flüssige Medium wird anschliessend erneut dem Kollektor zugeführt für erneutes Erwärmen desselben.

Analog kann durch Umkehr des Temperaturgradienten Wärme in den Kollektoren an die Umgebung abgeführt werden, um ein Gebäude zu klimatisieren bzw. abzukühlen.

Die Aufgabe der vorliegenden Erfindung besteht darin, einen Kollektor vorzuschlagen, mittels welchem analog den heute bekannten Systemen, wie beispielsweise den erwähnten Kollektoren, Umgebungswärme bzw. Sonneneinstrahlung an ein im Kollektor geführtes fluides Medium übertragen werden kann und welcher Kollektor einfach in der Herstellung, in der Handhabung, der Montage sowie im Betrieb ist.

Vorgeschlagen wird eine Vorrichtung bzw. ein Kollektor gemäss dem Wortlaut nach Anspruch 1.

Vorgeschlagen wird eine Vorrichtung zum Erwärmen oder Abkühlen eines fluiden Mediums durch Umgebungseinflüsse, wie Licht, Sonneneinstrahlung, Abstrahlung, Umgebungstemperatur etc., welche gekennzeichnet ist durch mindestens zwei parallel zueinander angeordnete Folien, welche derart teilweise aneinander haften, dass ein oder mehrere kammerartige Hohl- bzw. Zwischenräume gebildet werden, welche mindestens eine Öffnung aufweisen für das Zuführen eines fluiden Mediums sowie mindestens eine Öffnung für das Abführen des fluiden Mediums.

Gemäss einer bevorzugten Ausführungsvariante sind zwischen den Folien mindestens zwei oder mehr wenigstens nahezu parallel nebeneinander verlaufende kammerartige Hohlräume ausgebildet, welche entweder in sich selbst abgeschlossen ausgebildet sind und je mindestens eine Öffnung für das Zu- bzw. Abführen des fluiden Mediums aufweisen, oder aber die kammerartigen Hohlräume sind mindestens teilweise untereinander verbunden, um ein wenigstens teilweise zusammenhängendes, in sich geschlossenes Hohlraumsystem zu bilden, welches mindestens eine Öffnung für das Zuführen sowie mindestens eine Öffnung für das Abführen des fluiden Mediums aufweist. Hiermit besteht die Möglichkeit, das Kammersystem so zu verbinden, dass nur noch eine Zu- und Abfuhr pro gesamte Bahnenbreite benötigt wird.

Die Öffnungen für das Zuführen und Abführen des fluiden Mediums sind vorzugsweise in zueinander entgegengesetzten endständigen Bereichen der Hohlräume oder des Hohlraumsystems angeordnet, um ein weitgehendst ganzheitliches Durchströmen der kammerartigen Hohlräume bzw. des Hohlraumsystems zu garantieren.

Gemäss einer weiteren Ausführungsvariante ist die eine der beiden Folien über ein Vlies oder eine gewebeartige Verstärkungsschicht, wie eine sogenannte Trägerschicht, mit einer weiteren Folie vorzugsweise ganzflächig verbunden. Die Vorrichtung soll dann gleichzeitig als Kollektor und Abdichtung eingesetzt werden.

Die die Kammern bildenden Folien sind vorzugsweise aus einem Polymermaterial gefertigt, wie insbesondere wenigstens vorwiegend auf Basis eines Polyolefins. Gemäss einer beispielsweise bevorzugten Ausführungsvariante sind die Folien auf Basis von Polyethylen gefertigt, aufweisend entweder eine Faserverstärkung und/oder diese Folien sind chemisch vernetzt.

Mindestens die der Umgebung zugewandte Oberfläche der Vorrichtung ist vorzugsweise schwarz eingefärbt, kann aber auch eine andere der Umgebung angepasste Farbe aufweisen.

Weitere bevorzugte Ausführungsvarianten der Vorrichtung bzw. des Kollektors sind in den abhängigen Ansprüchen charakterisiert.

Für die Herstellung der erfindungsgemässen Vorrichtung bzw. des erfindungsgemässen Kollektors wird ein Verfahren gemäss dem Wortlaut nach einem der Ansprüche 9 oder 10 vorgeschlagen. Dabei wird vorgeschlagen, dass mindestens zwei Folien mittels Breitschlitzextrusion aneinander liegend extrudiert oder kaschiert werden, und zwischen die beiden Folienschichten in denjenigen Bereichen, in welchen die kammerartigen Hohlräume auszubilden sind, eine Trennfolie, ein Trennvlies oder -gewebe, ein Trennmittel eingeführt bzw. eingespritzt wird oder dass eine Prägung der einen Folie einen Luftspalt erzeugt, der eine Haftung im Bereich der zu erzeugenden Hohlräume verhindert.

Gemäss einer weiteren Ausführungsvariante wird vorgeschlagen, dass nach erfolgter Extrusion der mindestens zwei Folien diese in den nicht eine Trennfolie bzw. ein Trennvlies, ein Trennmittel oder Luftspalt aufweisenden Bereichen derart zusammengeführt bzw. zusammengepresst werden, dass die beiden Folien fest aneinander haften, worauf die miteinander verbundenen Folien abgekühlt werden.

Nach erfolgter Abkühlung erfolgt die Konfektionierung, um schliesslich die Vorrichtung bzw. den Kollektor nach einem der Ansprüche 1 bis 8 herzustellen.

Weiter vorgeschlagen wird eine Kollektoranlage zur Wärmegewinnung und/oder zur Klimatisierung bei einem Gebäude, gekennzeichnet durch mindestens eine vorab definierte Vorrichtung bzw. einen Kollektor, welche auf dem Dach und/oder an der Fassade des Gebäudes angeordnet ist und welche über Zufuhr- und Abführleitungen für den Transport eines fluiden Mediums mit einer Wärmepumpe oder einem Wärmetauscher verbunden ist, beispielsweise für das Erzeugen von Warmwasser.

Die erfindungsgemäss vorgeschlagene Vorrichtung bzw. der Kollektor sowie die erwähnte Kollektoranlage sind insbesondere geeignet für das Erzeugen von Warmwasser und/oder das Heizen von Gebäuden und Schwimmbecken wie auch für das Klimatisieren eines Gebäudes.

Die Erfindung wird nun beispielsweise und unter Bezug auf die beigefügten Figuren näher erläutert.

Dabei zeigen:
- Fig. 1: in Perspektive, schematisch, das Grundprinzip einer erfindungsgemässen Vorrichtung bzw. eines Kollektors;
- Fig. 2: einen Querschnitt durch den Kollektor von Fig. 1;
- Fig. 3: das Anordnen eines Kollektors auf einer bestehenden Dichtungsbahn, wobei zwischen Kollektor und bestehender Dichtungsbahn eine Verbindung besteht;
- Fig. 4: im Querschnitt, den seitlichen Randabschluss der Anordnung gemäss Fig. 3;
- Fig. 5: im Querschnitt, den seitlichen Randabschluss eines mit Primärabdichtung kombinierten erfindungsgemässen Kollektors;
- Fig. 6 und 7: in Perspektive und ausschnittsweise, im Querschnitt, die mechanische Fixierung eines Kollektors auf einer darunter angeordneten Primärabdichtung;
- Fig. 8: anhand eines Fliessschemas ein Herstellverfahren für die Herstellung eines erfindungsgemässen Kollektors;
- Fig. 9: schematisch, anhand einer perspektivischen Darstellung, eine mögliche Ausführungsvariante eines Herstellverfahrens, und
- Fig. 10 und 11: schematisch, das Anordnen einer Vorrichtung bzw. eines Kollektors auf einem Gebäudedach.

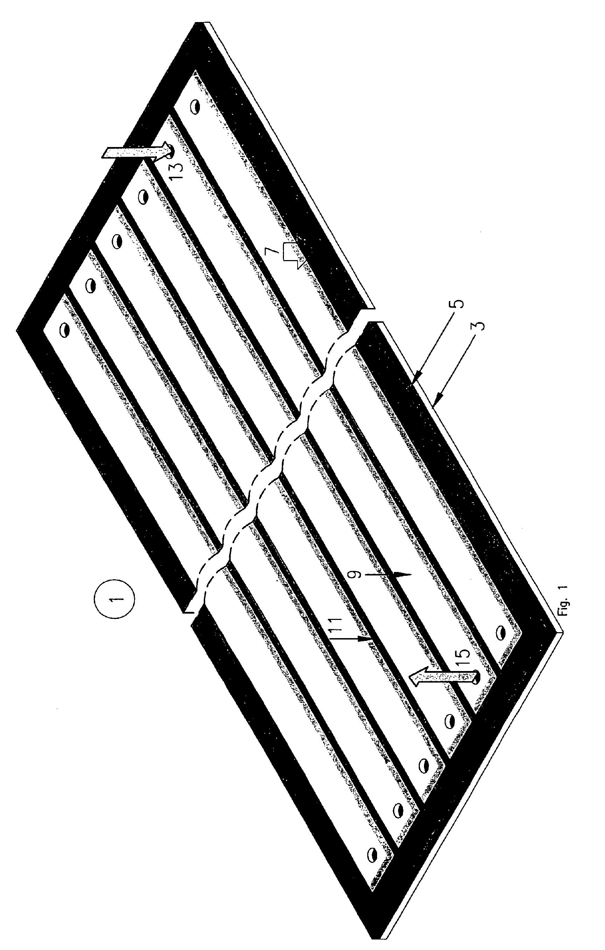

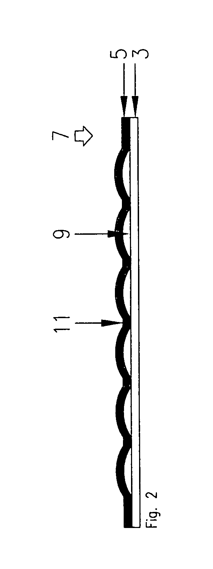

Anhand der beiden Figuren 1 und 2 wird das Grundprinzip einer erfindungsgemässen Vorrichtung bzw. eines Kollektors dargestellt. Dabei zeigt Fig. 1 den Kollektor in perspektivischer Ansicht von oben und Fig. 2 den Kollektor von Fig. 1 im Querschnitt.

Der Kollektor 1 besteht aus zwei übereinander angeordneten Polymerfolien 3 und 5, welche im Randbereich 7 sowie in mittig ausgebildeten Streifen 11 miteinander fest verbunden sind. Zwischen diesen festen Verbindungsbereichen sind kammerartige Hohlräume 9 ausgebildet, welche vorgesehen sind für das Durchströmt-Werden von einem fluiden Medium, wie beispielsweise von Wasser. Dieses wird je durch eine Eintrittsöffnung 13 in je einen kammerartigen Hohlraum 9 eingeführt und durch eine am entgegengesetzten Ende des Hohlraumes angeordnete Öffnung 15 wieder abgeführt. Vorzugsweise ist zumindest die der Oberfläche zugewandte Folie der Vorrichtung bzw. des Kollektors 1 schwarz eingefärbt, um Umgebungswärme bzw. Licht oder Sonneneinstrahlung optimal einzufangen, die Folie kann aber auch eine andere der Umgegung angepasste Farbe aufweisen. Dadurch wird das in den Hohlräumen 9 zirkulierte Wasser aufgrund der Erwärmung des Kollektors erwärmt, so dass die Austrittstemperatur TA höher ist als die Eintrittstemperatur TI. Mit anderen Worten ist ΔT = TA - TI > 0.

Es ist nun möglich, bei jedem einzelnen Hohlraum 9 je eine eigene Zufuhröffnung 13 anzuordnen sowie entsprechend eine Abfuhröffnung 15. Es ist aber auch möglich, je endständig die Hohlräume untereinander zu verbinden, um ein einziges, in sich geschlossenes Hohlraumsystem zu bilden, so dass je nur mindestens eine Einführöffnung bzw. Abführöffnung vorzusehen ist.

Die beiden miteinander verbundenen Folien 3 und 5 bestehen vorzugsweise aus einem flexiblen Polymermaterial, wobei es wichtig ist, dass das gewählte Polymer sowohl warmwasserbeständig ist sowie eine gute UV-Beständigkeit und Chemikalienbeständigkeit aufweist. Als vorteilhaft erwiesen haben sich Polymermaterialien, welche wenigstens weitgehendst auf Polyolefin aufgebaut sind, wobei bevorzugt ein Material auf Basis Polyethylen verwendet wird, welches entweder eine Faserverstärkung aufweist und/oder chemisch wenigstens teilweise vernetzt worden ist. Selbstverständlich können auch andere geeignete Polymermaterialien verwendet werden, wesentlich ist insbesondere beim Anordnen des Kollektors auf einem Dach, dass das polymere Material nebst der erwähnten Warmwasseroder Wärmeträgermedium sowie UV-Beständigkeit auch eine gute Witterungsbeständigkeit aufweist beispielsweise gegen Ozon sowie eine Beständigkeit gegen beispielsweise im Regen gelöste Chemikalien, wie insbesondere gegen den sogenannten "sauren Regen".

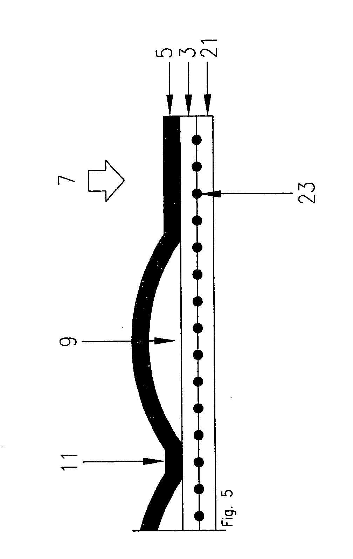

In der Fig. 5 ist eine weitere Ausführungsvariante eines erfindungsgemässen Kollektors dargestellt, wobei die beiden unter Bezug auf Fig. 1 und 2 erwähnten Folien auf eine zusätzliche Abdichtungsbahn 21 aufgebracht sind, beispielsweise ganzflächig verbunden mit einem dazwischen angeordneten Verstärkungsträger 23. Bei diesem Verstärkungsträger 23 kann es sich beispielsweise um ein Polyester- oder Glasvlies und/oder um ein Verstärkungsgewebe, beispielsweise wiederum basierend auf einem Polyestermaterial oder Glasfasermaterial, oder aber um ein Kohlefasermaterial handeln. Das Anordnen auf einer zusätzlichen Abdichtungsbahn 21 kann vorteilhaft sein, wenn die erfindungsgemässe Vorrichtung bzw. der Kollektor direkt als Abdichtungsbahn beispielsweise auf einem Flachdach angeordnet wird. Durch diese zusätzliche Abdichtungsbahn 21 wird sichergestellt, dass die durch die Hohlräume 9 zirkulierende Flüssigkeit bzw. das Wasser nicht in das Gebäudeinnere gelangen kann. Durch die zusätzliche Trägerschicht 23 erhält die Abdeckung inklusive Kollektor die notwendige Stabilität bzw. Festigkeit. Bei der in Fig. 5 dargestellten dreischichtigen Kollektorvariante kann es sich beispielsweise um eine Primärabdichtung handeln, so dass keine weitere Dichtungsbahn mehr anzuordnen ist.

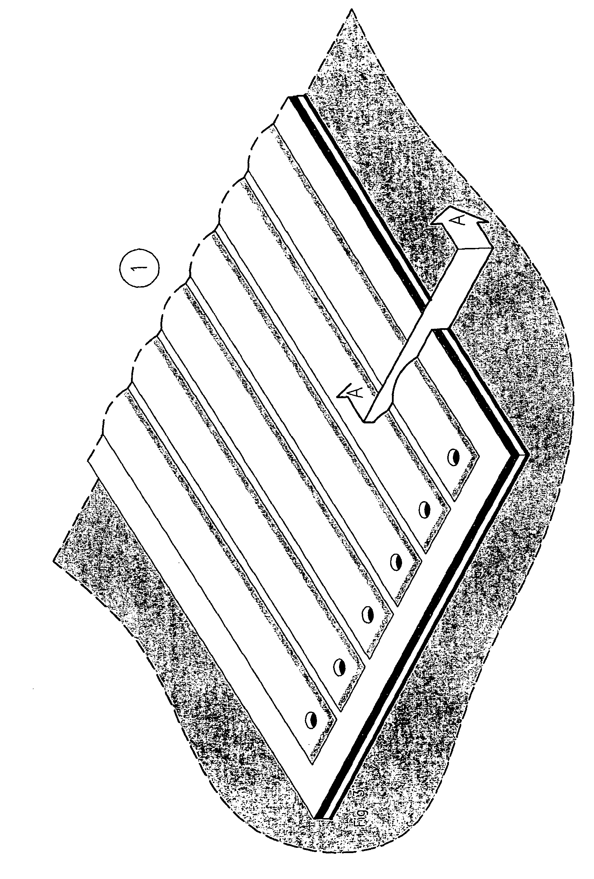

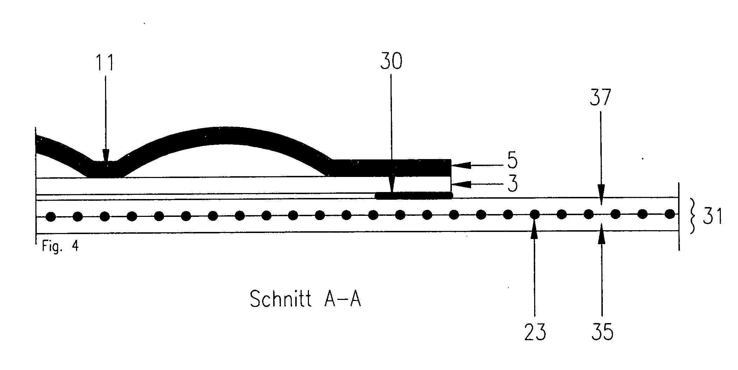

Selbstverständlich ist es auch möglich, die erfindungsgemässe Vorrichtung bzw. den Kollektor 1 auf einer bereits angeordneten Dichtungsbahn bzw. Primärabdichtung 31 anzuordnen, wie schematisch im Querschnitt in Fig. 4 und in Perspektive in Fig. 3 dargestellt. Wie insbesondere in Fig. 4 erkennbar, ist die Vorrichtung bzw. der Kollektor auf einer Primärabdichtung 31 angeordnet, welche ihrerseits aus den beiden Schichten 35 und 37 bestehen kann, welche miteinander über eine Träger- bzw. Verstärkungsschicht 23 verbunden sind. Die Primärabdichtung kann wiederum aus zwei oder mehreren Polymerschichten auf Basis eines Polyolefins bestehen, oder aber auf Basis irgend eines anderen geeignetes Polymers. Derartige Primärabdichtungen sind insbesondere beim Abdichten von Flachdächern oder anderen der Witterung ausgesetzten Ebenen bekannt, wie beispielsweise für das Abdichten von Terrassen, Garagendächern etc. Wie in Fig. 3 erkennbar und in Fig. 4 schematisch dargestellt, ist der erfindungsgemässe Kollektor durch mittels eines Schweissgerätes hergestellte Schweissverbindung 30 oder über eine Klebeverbindung mit der darunter liegenden Primärabdichtung verbunden.

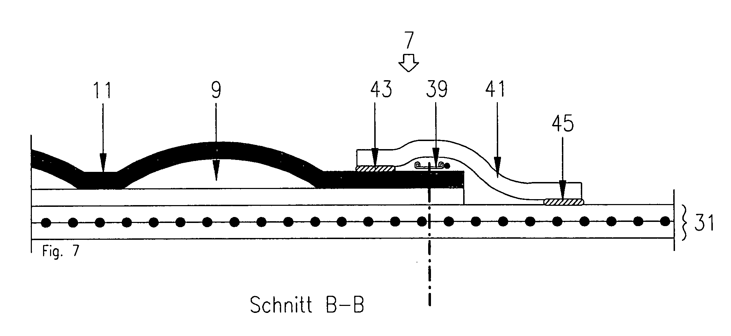

Selbstverständlich ist es aber auch möglich, den Kollektor mit der darunter angeordneten Primärabdichtung 31 mechanisch zu verbinden, wie beispielsweise schematisch im Querschnitt in Fig. 7 dargestellt. Wiederum im Randbereich ist der Kollektor 1 mittels einer mechanischen Fixierung 39 durch die darunter angeordnete Primärabdichtung 31 mit dem Untergrund verbunden, wobei es zusätzlich notwendig ist, die mechanische Fixierung mittels eines die Fixierung überlappenden Streifens 41 zu überdecken, welcher Streifen 41 wiederum mittels Schweiss- und/oder Klebfugen 43 und 45 mit dem Kollektor sowie mit der Primärabdichtung 31 dicht verbunden ist.

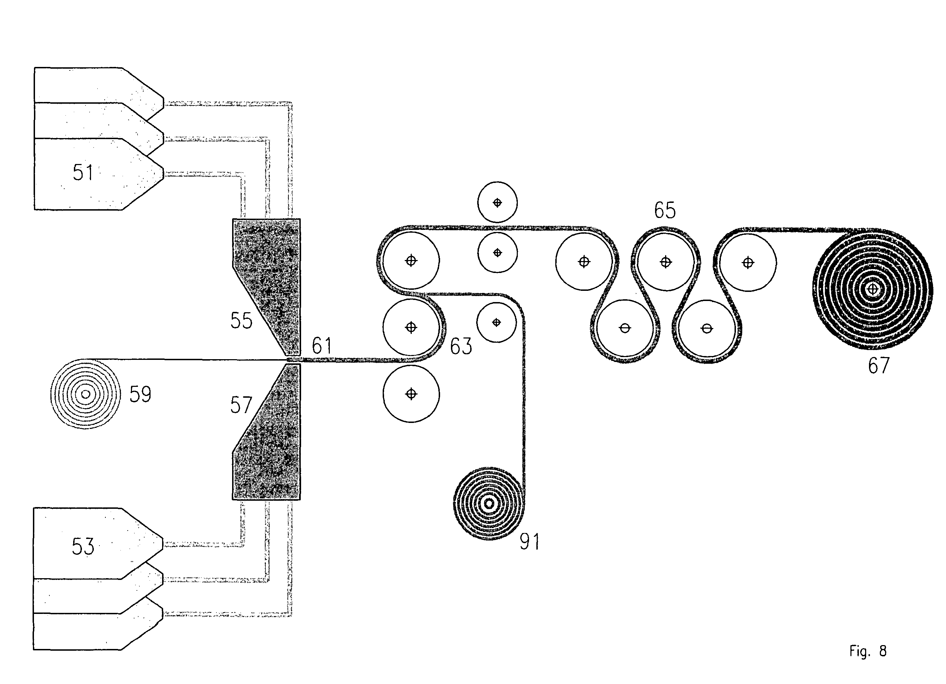

Eine für die Erzeugung der erfindungsgemässen Vorrichtung bzw. des Kollektors geeignetes Herstellverfahren ist schematisch anhand eines Flussdiagramms in Fig. 8 dargestellt. Aus Vorrats-, Vorlage- bzw. Beschickungsbehältnissen 51 und 53 werden die beiden Extruder 55 und 57 gespiesen. Bei den aus den Behältnissen 51 und 53 gespiesenen Komponenten handelt es sich beispielsweise um Polymergranulate oder Polymerpulver und/oder um Additive wie Stabilisatoren, Füllstoffe und dergleichen. Bei den Extrudern 55 und 57 handelt es sich vorzugsweise um Breitschlitzextruder, aus deren Düsen die beiden Folien zueinander parallel verlaufend extrudiert werden.

Für die Herstellung der erfindungsgemäss definierten Hohlräume bzw. Kammern werden von einer Rolle 59 Trennmaterialien, wie beispielsweise Trennfolien, Trennfilme, Vliese, Gewebe oder dergleichen abgerollt und zwischen die beiden durch die Breitschlitzdüsen extrudierten Folien eingeführt. Bei den Trennmaterialien kann es sich beispielsweise um Aluminiumfolien, silikonbehandelte Folien etc. handeln. Selbstverständlich ist es auch möglich, anstelle der angeführten Trennmaterialien durch Einsprühen eines entsprechenden flüssigen Trennmittels die für die Erzeugung der Hohlräume streifenartigen Bereiche zu erzeugen, in welchen die beiden Folien nicht aneinander haften dürfen. Vom Bereich 61, in welchem die Folien und das Trennmittel aneinandergefügt werden, erfolgt der Transport zu Walzen 63, wo ein festes Verbinden der Folien in denjenigen Bereich erfolgt, wo keine Hohlräume bzw. Kammern auszubilden sind. Anschliessend werden die Folien über Kühlwalzen 65 auf eine Trommel 67 aufgewickelt.

Alternativ zur Verwendung von Trennmaterialien und Trennmitteln ist es möglich, eine geprägte Folie von einer Rolle 91 vor den Kühlwalzen 65, z.B. bei den Walzen 63, auf die andere Folien zu kaschieren. An den erhöhten Stellen der Prägung werden die Folien fest aneinander gefügt, an den vertieften Stellen der Prägung werden die Hohlräume gebildet.

Von der Aufwicklung 67 können nun die Endlosfolien in der gewünschten Länge abgewickelt werden und endständig verschweisst werden zur Herstellung des erfindungsgemässen Kollektors, bei welchem lediglich die einzelnen Hohlkammern noch mit den Zufuhr- bzw. Abführöffnungen zu versehen sind, durch welche die die Hohlräume durchströmende Flüssigkeit zugeführt bzw. abgeführt werden kann.

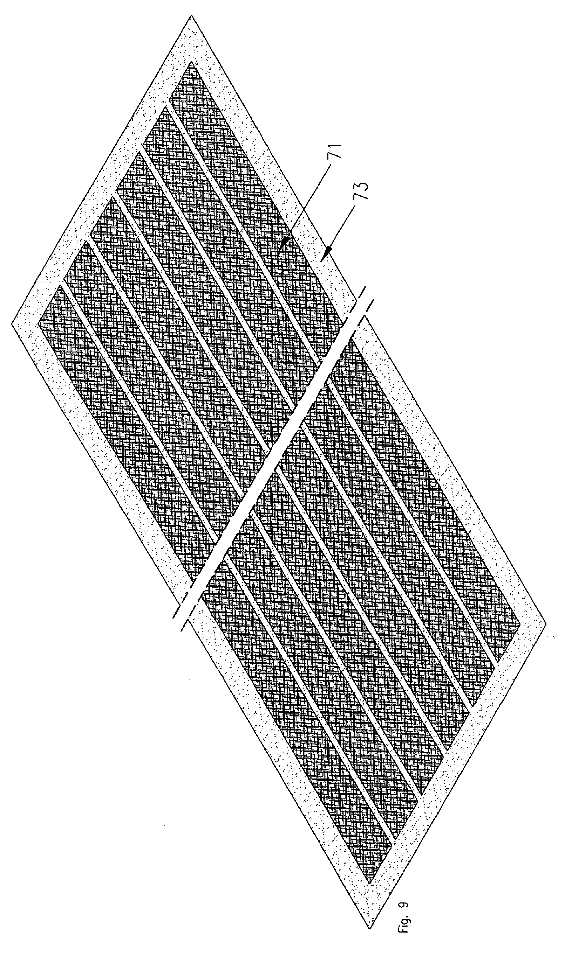

Anhand von Fig. 9 soll eine mögliche Ausführungsvariante des Herstellverfahrens näher erläutert werden. Auf der das Trennmaterial enthaltenden Trommel 59 gemäss Fig. 8 kann beispielsweise ein Trägermaterial wie in Fig. 9 dargestellt angeordnet sein, bei welchem es sich beispielsweise um eine vliesartiges oder gewebeartiges Material handelt. Entlang von Streifenabschnitten 71 ist dieses Trägervlies bzw. - gewebe zusätzlich mit einem Trennmaterial behandelt, so dass beim Extrudieren im Bereich 63, wiederum bezogen auf Fig. 8, keine Verbindung zwischen oberer und unterer Folie entstehen kann, währenddem in den übrigen Bereichen 73 des Trägervlieses bzw. -gewebes infolge Fehlens des Trennmittels eine Durchdringung durch das flüssige Polymermaterial möglich ist. Bezogen nun auf Fig. 9 heisst das, dass eine Vorrichtung bzw. ein Kollektor 1 in den Bereichen 71 die erwünschten Hohlräume 9 aufweisend ausgebildet ist, d.h. in diesem Bereich haften die beiden Polymerfolien nicht aneinander. Demgegenüber besteht eine feste Verbindung in den Bereichen 73 zwischen den beiden den Kollektor oben und unten abdeckenden Polymerfolien.

Somit ist es möglich, beim Aufrollen des Trägervlieses bzw. - gewebes auf die Trommel 59 bereits entsprechend den zu erzeugenden Kollektorlängen ein Trennmittel in den Bereichen 71 auf das Trägermaterial aufzutragen, wodurch dann anschliessend beim Herstellen der erfindungsgemässen Kollektoren die geforderten Hohlräume erzeugt werden.

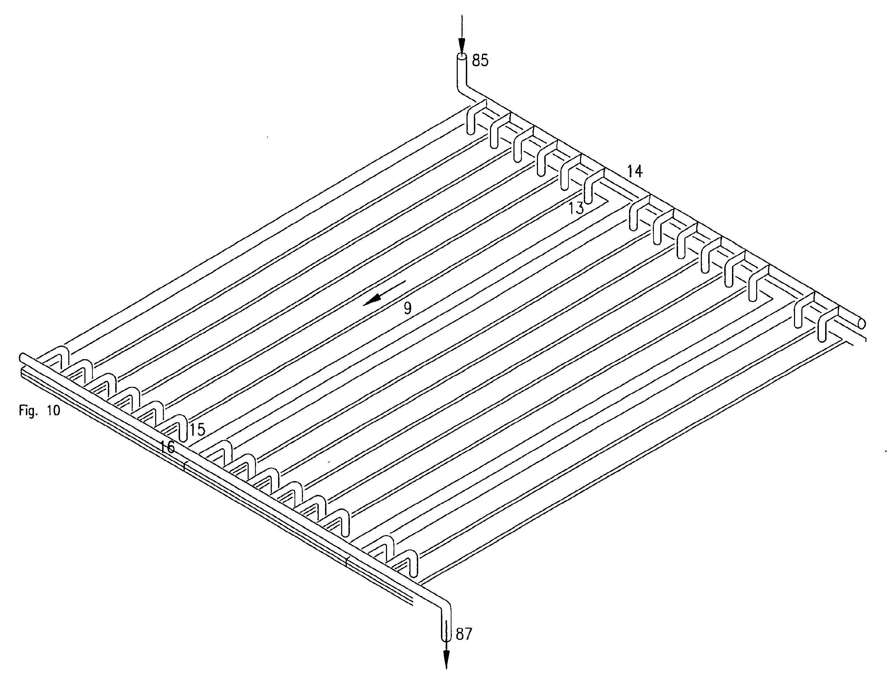

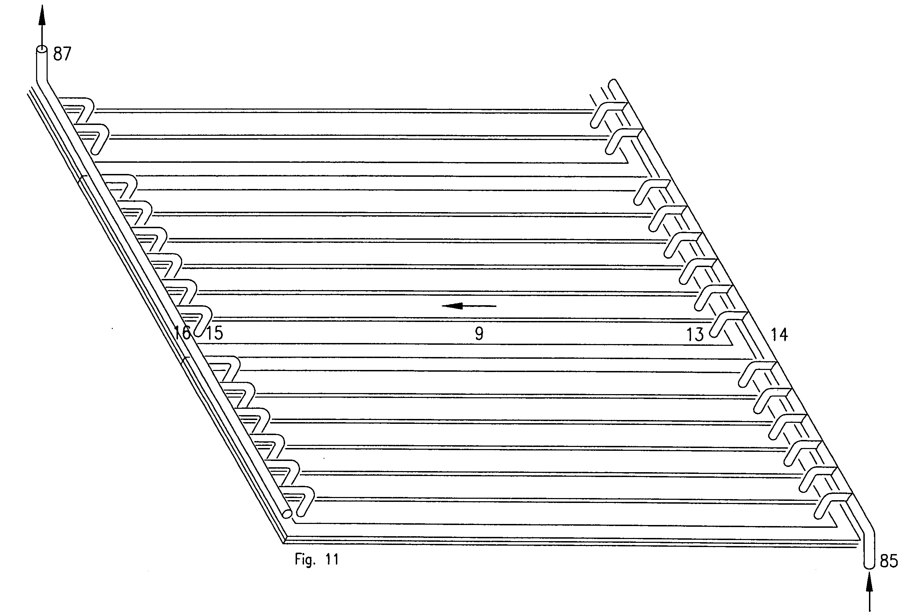

In den beiden Fig. 10 und 11 ist eine Möglichkeit des Anordnens einer erfindungsgemässen Vorrichtung bzw. eines Kollektors je auf einem Hausdach dargestellt. In Fig. 10 ist auf einem Flachdach ein erfindungsgemässer Kollektor 1 angeordnet, welcher wie erfindungsgemäss gefordert die parallel längs nebeneinander angeordneten Hohlräume bzw.

Kammern aufweist. Die einzelnen Kammern werden über Eingangsöffnungen 13 gespiesen, welche untereinander über eine Verbindungsleitung 14 miteinander verbunden sind, welche am einen Ende über eine Öffnung 85 beispielsweise mit Wasser gespiesen wird. Auf der entgegengesetzten Seite verlässt die Trägerflüssigkeit bzw. das Wasser über Öffnungen 15 die Hohlräume 9, welche Öffungen 15 wiederum über ein Verbindungsleitung 16 miteinander verbunden sind, aus welcher Verbindungsleitung über eine Öffnung 87 die Trägerflüssigkeit den Kollektor verlässt. Die Zuleitung 85 wie auch die Entleerung 87 sind vorzugsweise diagonal zueinander angeordnet, um einen optimalen, gleichmässigen Durchfluss durch die einzelnen Hohlkammern 9 zu ermöglichen.

Analog ist in Fig. 11 auf einem geneigten Dach erneut ein Kollektor 1 angeordnet, welcher wiederum durch eine Eingangsöffnung 85 gespiesen wird und welcher über einen Auslass 87 entleer wird.

Analog der Erzeugung von Wärme bzw. von Warmwasser ist es selbstverständlich auch möglich, umgekehrt den Kollektor 1 zur Klimatisierung bzw. für die Kühlung eines Gebäudes zu verwenden. In diesem Falle gibt das Trägermedium über den Kollektor 1 Wärme an die Umgebung ab.

Daher ist es selbstverständlich sinnvoll, den Kollektor mit einer hellen Farbe auszustatten oder diesen vor der Einwirkung von Sonneneinstrahlung fern zu halten, damit keine Wärme vom Kollektor absorbiert wird.

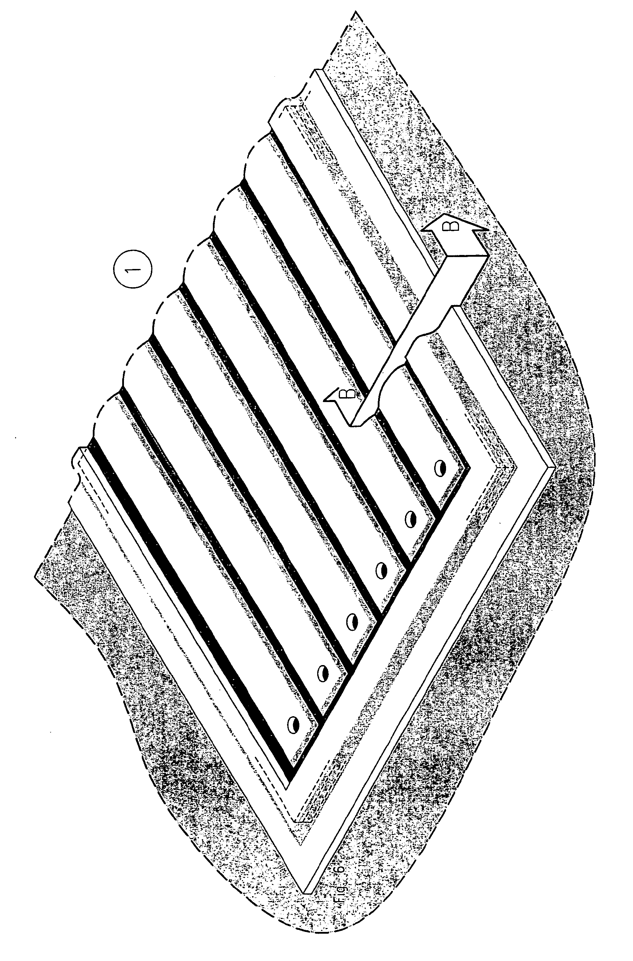

Bei den unter Bezug auf die Fig. 1 - 11 dargestellten erfindungsgemässen Vorrichtungen bzw. Kollektoren und Anwendungen handelt es sich selbstverständlich nur um Beispiele, welche auf x-beliebige Art und Weise abgeändert, ergänzt oder modifiziert werden können. So ist es selbstverständlich möglich, die Kammern zwischen den beiden Folien andersartig, als wie in den Fig. 1 und folgende dargestellt, auszubilden, d.h. es können beispielsweise grossflächige Hohlräume ausgebildet werden oder aber Feinstkammern, welche eher einem Rohrregister gleichen. Auch die verwendeten Polymermaterialien sind selbstverständlich nicht auf solche basierend auf Polyethylen beschränkt, sondern irgendwelche andere polymere Materialen können verwendet werden wie Polypropylen, Polybuten, vernetztes EPDM (Terpolymere auf Basis Ethylen, Propylen und Dien Monomeren), welche über die notwendige Warmwasserbeständigkeit, UV- und WitterungsBeständigkeit sowie Chemikalien-Beständigkeit verfügen.

Auch das Anordnen der erfindungsgemässen Kollektoren ist nicht auf das Anbringen auf einer Dachfläche beschränkt, sondern derartige Kollektoren können auf irgendwelchen flächigen Unterlagen, wie Terrassen, Garagendächern, Fassaden und dergleichen angeordnet werden.

## Patentansprüche

1. Vorrichtung zum Erwärmen oder Abkühlen eines fluiden Mediums durch Umgebungseinflüsse, wie Licht, Sonneneinstrahlung, Abstrahlung, Umgebungstemperatur etc., **gekennzeichnet durch**
- mindestens zwei parallel zueinander angeordnete Folien (3, 5), welche derart teilweise aneinander haften, dass ein oder mehrere kammerartige Hohl- bzw. Zwischenräume (9) gebildet werden, welche mindestens eine Öffnung (13) aufweisen für das Zuführen eines fluiden Mediums sowie mindestens eine Öffnung (15) für das Abführen des fluiden Mediums.

2. Vorrichtung nach Anspruch 1, **dadurch gekennzeichnet, dass** zwischen den Folien (3, 5) mindestens zwei oder mehr parallel nebeneinander verlaufende kammerartige Hohlräume (9) ausgebildet sind.

3. Vorrichtung nach einem der Ansprüche 1 oder 2, **dadurch gekennzeichnet, dass** die kammerartigen Hohlräume (9) je endständig miteinander verbunden sind zur Bildung eines einzigen zusammenhängenden Kammersystems, wobei im Bereich der einen Verbindung mindestens eine Öffnung (85) für das Zuführen des fluiden Mediums vorgesehen ist und im Bereich der gegenüberliegenden Verbindung mindestens eine Öffnung (87) für das Abführen des fluiden Mediums.

4. Vorrichtung nach einem der Ansprüche 1 bis 3, **dadurch gekennzeichnet, dass** die eine der beiden Folien (3) über eine vlies- oder gewebeartige Verstärkungsschicht, wie eine sogenannte Trägerschicht (23) mit einer weiteren Folie (21) vorzugsweise ganzflächig verbunden ist und somit gleichzeitig als Abdichtung einsetzbar ist.

5. Vorrichtung nach einem der Ansprüche 1 bis 4, **dadurch gekennzeichnet, dass** die die Kammern bildenden Folien (3, 5) aus einem flexiblen Polymermaterial gefertigt sind, wenigstens vorwiegend auf Basis eines Polyolefins.

6. Vorrichtung nach einem der Ansprüche 1 bis 5, **dadurch gekennzeichnet, dass** die beiden Folien (3, 5) auf Basis Polyethylen gefertigt sind, gegebenenfalls aufweisend entweder eine Faserverstärkung und/oder die Folien sind wenigstens teilweise chemisch vernetzt.

7. Vorrichtung nach einem der Ansprüche 1 bis 6, **dadurch gekennzeichnet, dass** wenigstens die der Umgebung zugewandte Oberfläche (5) der Vorrichtung schwarz eingefärbt ist.

8. Vorrichtung nach einem der Ansprüche 4 bis 7, **dadurch gekennzeichnet, dass** die Trägerschicht (23) aus einem weitgehendst aus Polyester-, Glas- und/oder Kohlefasern gefertigtem Vlies oder Gewebe besteht.

9. Verfahren zur Herstellung einer Vorrichtung nach einem der Ansprüche 1 bis 8, **dadurch gekennzeichnet, dass** mindestens zwei Folien mittels Breitschlitzextrusion aneinanderliegend extrudiert werden und zwischen die beiden Folienschichten in denjenigen Bereichen, in welchen die kammerartigen Hohlräume auszubilden sind, ein Trennmaterial, wie eine Trennfolie, ein Trennvlies, ein Trenngewebe oder ein Trennmittel, eingeführt bzw. eingespritzt wird.

10. Verfahren zur Herstellung einer Vorrichtung nach einem der Ansprüche 1 bis 8, **dadurch gekennzeichnet, dass** mindestens eine Folie, aufweisend Prägungen, auf eine weitere Folie kaschiert wird, an den erhöhten Stellen der Prägung die Folien fest aneinandergefügt bzw. miteinander verbunden werden und an den vertieften Stellen der Prägung Hohlräume gebildet werden.

11. Verfahren nach einem der Ansprüche 9 oder 10, **dadurch gekennzeichnet, dass** nach erfolgter Extrusion oder Kaschierung der mindestens zwei Folien die beiden Folien in den nicht das Trennmaterial aufweisenden Bereichen bzw. an den Stellen erhöhter Prägungen derart verbunden werden, dass die beiden Folien fest aneinander haften, worauf die miteinander verbundenen Folien abgekühlt werden.

12. Verfahren nach einem der Ansprüche 9 bis 11, **dadurch gekennzeichnet, dass** die aneinandergefügten bzw. kaschierten Folien auf die gewünschte Länge geschnitten werden und anschliessend die beiden in Längsrichtung endständigen Bereiche beispielsweise mittels Schweissen miteinander verbunden werden und schliesslich die Hohlräume bzw. die Kammern mit den Zufluss- bzw. Abflussöffnungen versehen werden.

13. Kollektoranordnung zur Wärmegewinnung und/oder zur Klimatisierung bzw. Kühlung bei Gebäuden, **gekennzeichnet durch**
- mindestens eine Vorrichtung nach einem der Ansprüche 1 bis 8, angeordnet auf oder im Dach und/oder an oder in der Fassade des Gebäudes, und
- Zufuhr- und Abführleitungen für das fluide Trägermedium, vorgesehen zum Durchströmen der Vorrichtung.

14. Verwendung der Vorrichtung bzw. der Anordnung nach einem der Ansprüche 1 bis 8 oder 13 zur Erzeugung von Warmwasser und/oder zum Heizen eines Gebäudes oder eines Raumes oder eines Schwimmbeckens.

15. Verwendung der Vorrichtung nach einem der Ansprüche 1 bis 8 oder der Anordnung nach Anspruch 13 zur Klimatisierung bzw. Kühlung eines Gebäudes.
